# EUROPEAN PATENT APPLICATION

(11) **EP 2 693 189 A1**
(43) Date of publication of application: **05.02.2014**
(21) Application number: 12765080.2
(22) Date of filing: 29.03.2012
(51) Int. Cl.: G01N 3/40

(54) **IN-LINE HARDNESS INSPECTION DEVICE, IN-LINE HARDNESS INSPECTION METHOD, AND ROBOT**

(30) Priority: 30.03.2011 JP 2011076448
(71) Applicant: Hino Motors Ltd., Tokyo 191-8660 (JP)
(72) Inventor: OKADA, Yuusuke, Hino-shi, Tokyo 191-8660 (JP); FUKUDA, Hiroshi, Hino-shi, Tokyo 191-8660 (JP); MAGOME, Hideaki, Hino-shi, Tokyo 191-8660 (JP)
(74) Representative: Skone James, Robert Edmund
(86) International application number: PCT/JP2012/058441
(87) International publication number: WO 2012/133690

(57) **Abstract**

Provided is an in-line hardness inspection apparatus, which can perform total inspection of hardness of work in a non-destructive manner in a manufacture line. Also provided are an in-line hardness inspection method and a robot. An in-line hardness inspection apparatus of the present invention has: a robot having a hardness inspection unit that inspects hardness of work; a work transfer means, which constitutes a part of a manufacture line, and transfers, to the robot, the work to be inspected; and a control means, which makes the robot perform the hardness inspection with respect to the work transferred by means of the work transfer means.

## Description

### {Technical Field}

The present invention relates to an in-line hardness inspection device, an in-line hardness inspection method, and a robot.

### {Background Art}

In hardness inspection of a product or the like, a test sample is cut out from the product, and a test load is applied to the test sample, to thereby measure and evaluate the depth and size of the indentation (for example, see patent literature PTL 1). Further, such hardness inspection is manually performed by providing a dedicated examiner.

### {Citation List}

### {Patent Literature}

{PTL1} JP 2000-146794 A

### {Summary of Invention}

### {Technical Problem}

The hardness inspection as described above is destructive inspection in which the test sample is cut out for use, and hence the products cannot be subjected to total inspection.

The present invention has been made under such a background, and has an object to provide an in-line hardness inspection device, an in-line hardness inspection method, and a robot, which are capable of performing, in a non-destructive manner, total inspection of hardness of a workpiece in the middle of a manufacturing line.

### {Solution to Problem}

One aspect of the present invention resides in an in-line hardness inspection device. According to the present invention, the in-line hardness inspection device comprises: a robot including a hardness inspection unit which inspects hardness of a workpiece; workpiece transporting means constituting a part of a manufacturing line, the workpiece transporting means being configured to transport the workpiece that is an object to be inspected to the robot; and a control means which executes hardness inspection with respect to the workpiece transported by the workpiece transporting means.

The robot may further include: a gripping unit which grips the workpiece; and an arm unit which moves or rotates the gripping unit under a state in which the workpiece is gripped, and the hardness inspection unit may be provided on the gripping unit, and inspect the hardness of the workpiece that is gripped by the gripping unit.

For example, the hardness inspection unit may include a means of inspecting Rockwell hardness.

Another aspect of the present invention resides in an in-line hardness inspection method. According to the present invention, the in-line hardness inspection method includes: transporting, by workpiece transporting means constituting a part of a manufacturing line, a workpiece that is an object to be inspected; and executing, by a robot including a hardness inspection unit which inspects hardness of the workpiece and being arranged adjacent to the workpiece transporting means, hardness inspection with respect to the workpiece transported by the workpiece transporting means.

In the in-line hardness inspection method, the robot may include: a gripping unit which grips the workpiece; and an arm unit which moves or rotates the gripping unit under a state in which the workpiece is gripped, and the hardness inspection unit may be provided on the gripping unit, and inspect the hardness of the workpiece that is gripped by the gripping unit.

Another aspect of the present invention resides in a robot. According to the present invention, the robot is arranged adjacent to workpiece transporting means that constitutes a part of a manufacturing line and transports a workpiece that is an object to be inspected, and the robot is configured to execute hardness inspection with respect to the workpiece transported by the workpiece transporting means. The robot includes a hardness inspection unit which inspects hardness of the workpiece.

This robot may further include: a gripping unit which grips the workpiece; and an arm unit which moves or rotates the gripping unit under a state in which the workpiece is gripped. The hardness inspection unit may be provided on the gripping unit, and inspect the hardness of the workpiece that is gripped by the gripping unit.

### {Advantageous Effects of Invention}

According to the present invention, it is possible to perform, in a non-destructive manner, the total inspection of the hardness of the workpiece in the middle of the manufacturing line.

### {Brief Description of Drawings}

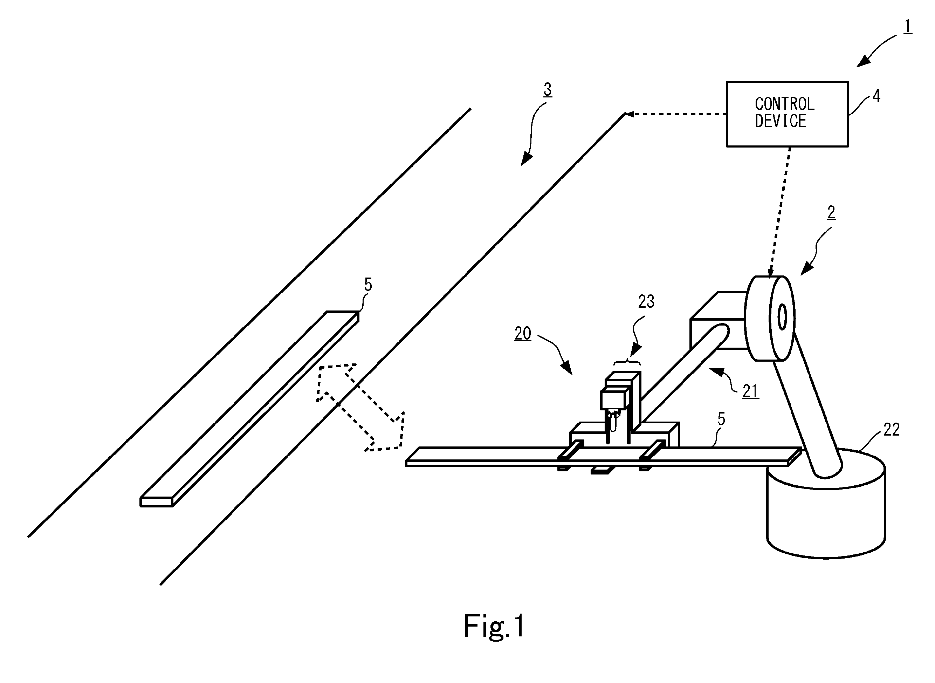

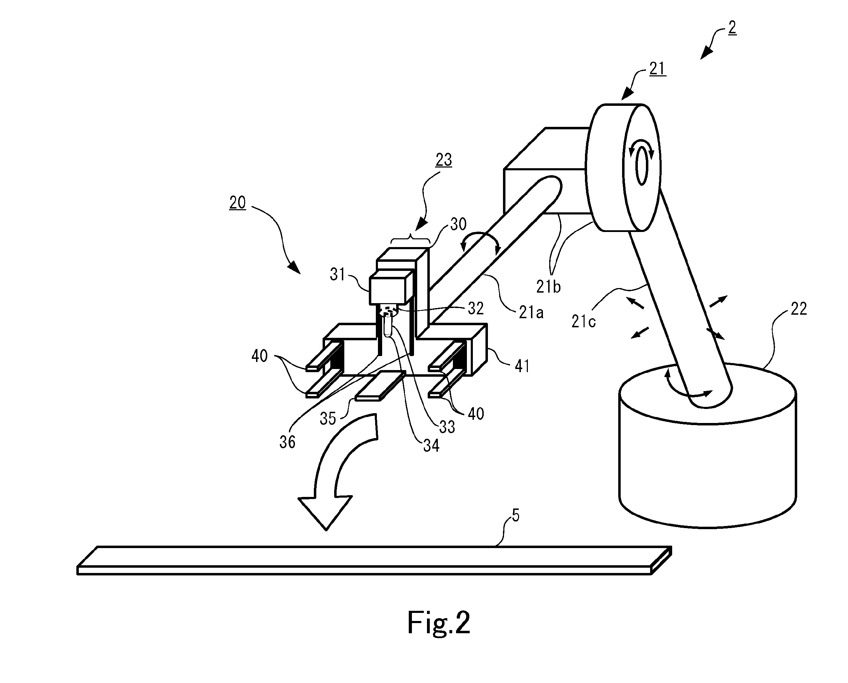

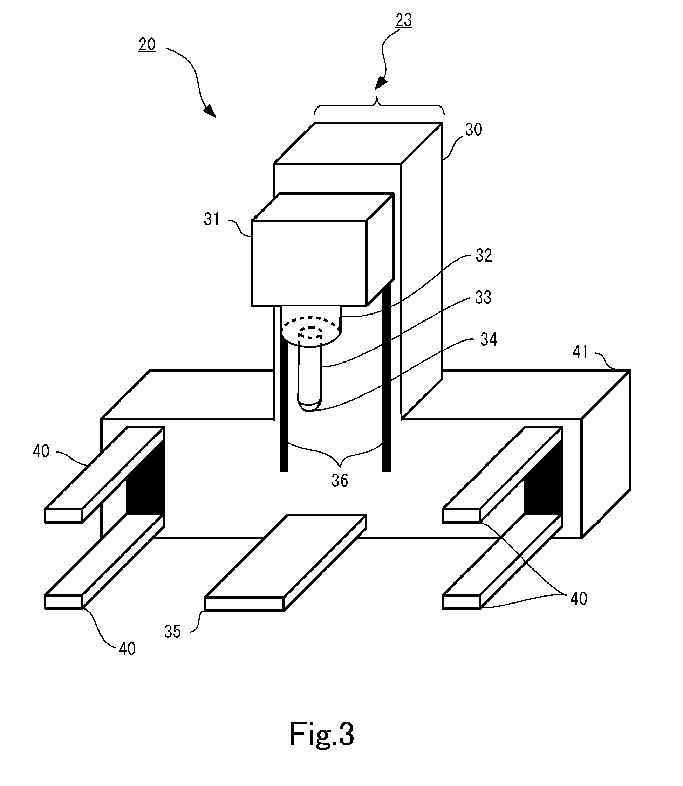

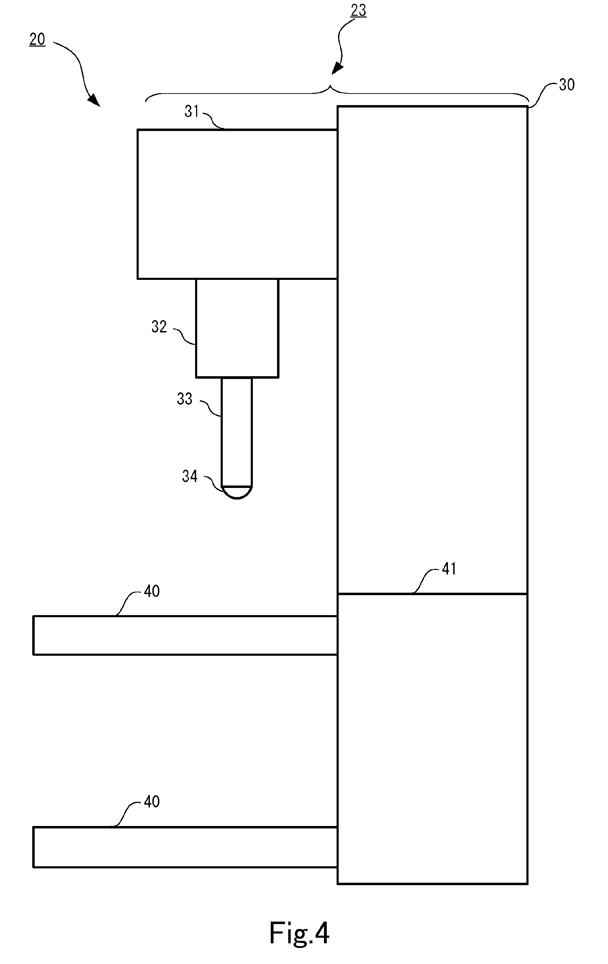

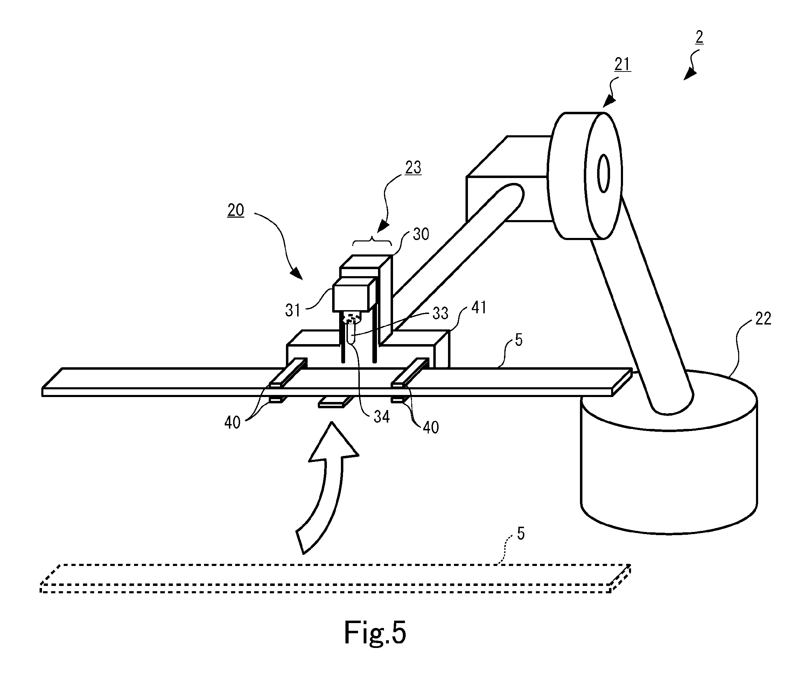

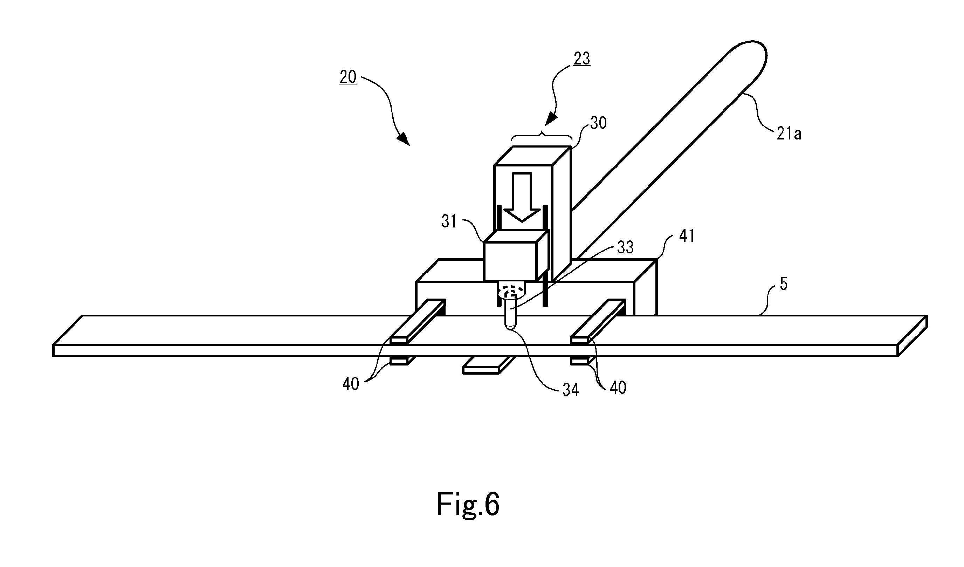

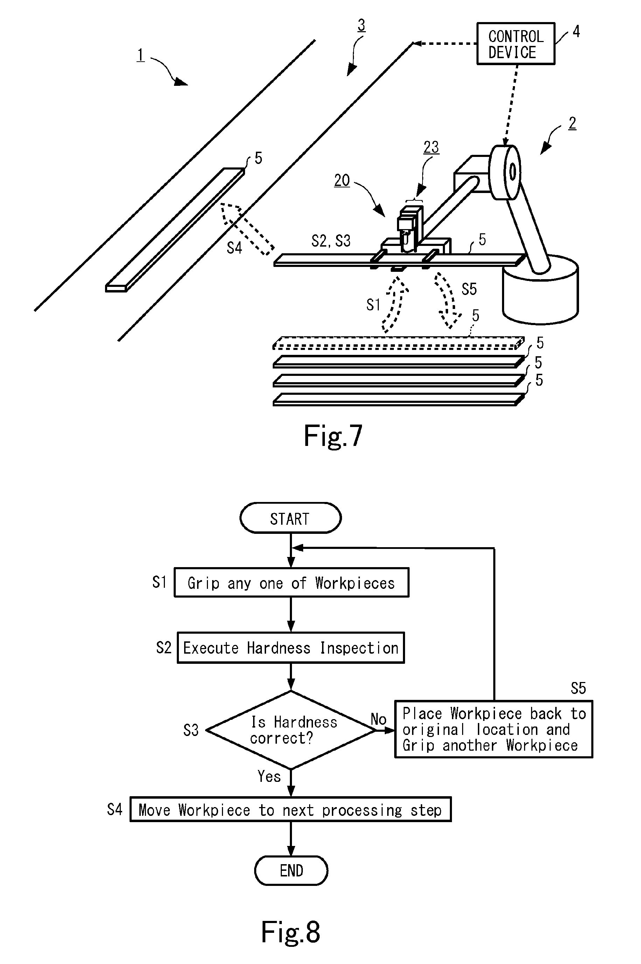

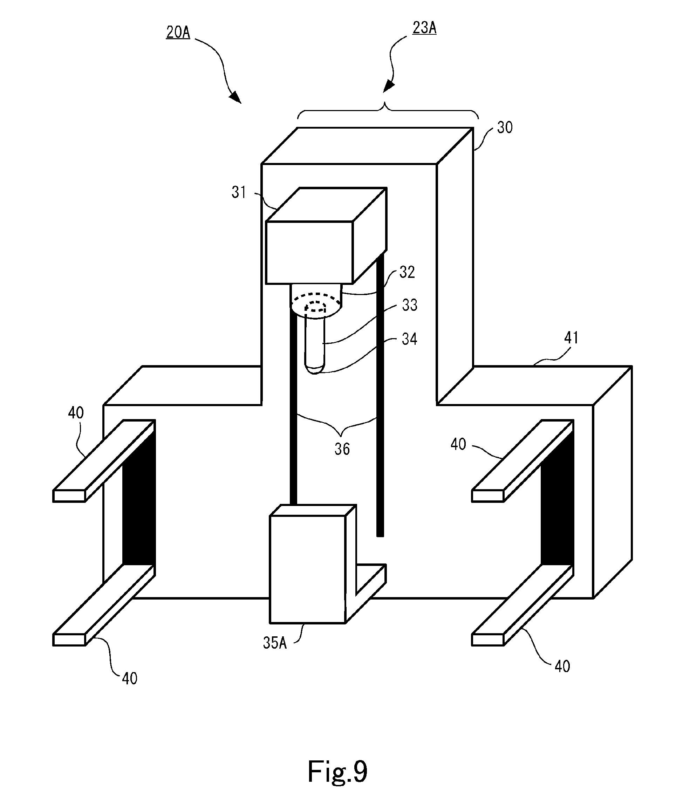

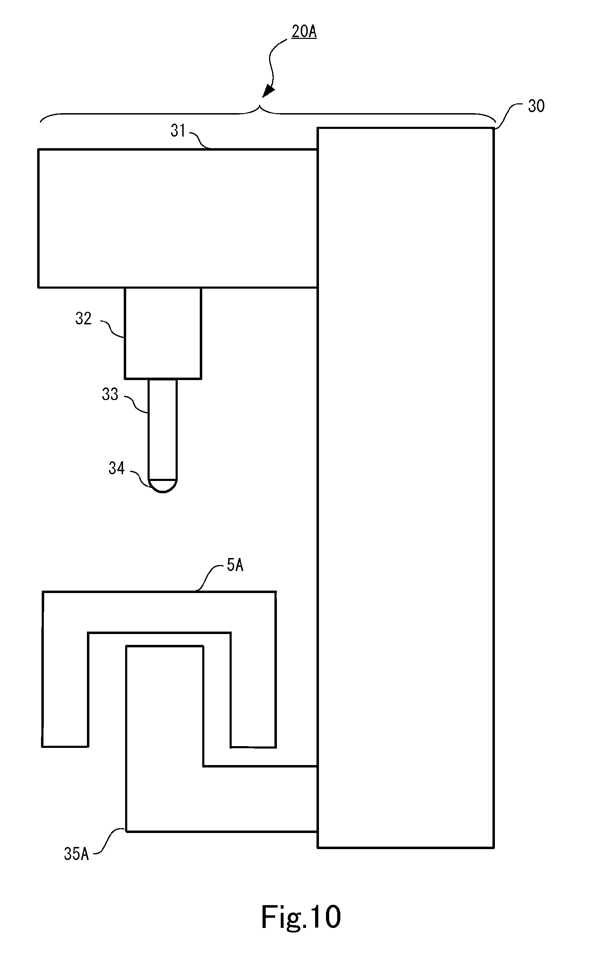

{Fig. 1} FIG. 1 is an overall configuration diagram of an in-line hardness inspection device according to an embodiment of the present invention.
{Fig. 2} FIG. 2 is an overall configuration diagram of a robot according to a first embodiment of the present invention.
{Fig. 3} FIG. 3 is an enlarged view of a gripping unit of FIG. 2.
{Fig. 4} FIG. 4 is a view illustrating a state in which the gripping unit of FIG. 3 is viewed from the lateral side.
{Fig. 5} FIG. 5 is a view illustrating a state in which the robot of FIG. 2 grips a workpiece.
{Fig. 6} FIG. 6 is a view illustrating a state in which the robot gripping the workpiece in FIG. 5 lowers an indenter to perform hardness inspection.
{Fig. 7} FIG. 7 is a diagram illustrating a manufacturing line performing a workpiece selecting step based on hardness inspection by the robot according to the first embodiment of the present invention.
{Fig. 8} FIG. 8 is a flow chart illustrating the workpiece selecting step based on the hardness inspection by the robot according to the first embodiment of the present invention.
{Fig. 9} FIG. 9 is a view illustrating a gripping unit according to a second embodiment of the present invention.
{Fig. 10} FIG. 10 is a view illustrating a state in which a hardness inspection unit of the gripping unit of FIG. 9 is viewed from the lateral side.

{Description of Embodiments}

An in-line hardness inspection device 1 and a robot 2 according to an embodiment of the present invention are described with reference to FIGS. 1 to 10.

### [Summary of In-line Hardness Inspection Device 1]

The in-line hardness inspection device 1 includes, as illustrated in FIG. 1, the robot 2, a conveyor belt 3 constituting a part of a manufacturing line (referred to as "workpiece transporting means" in claims), and a control device 4 (referred to as "control means" in claims). With this, the robot 2 automatically performs, in a non-destructive manner, hardness inspection with respect to all workpieces 5 transported on the conveyor belt 3.

### [Summary of Robots 2 and 2A]

The robot 2 of a first embodiment of the present invention includes, as illustrated in FIG. 2, a gripping unit 20, an arm unit 21, and a main body portion 22. The gripping unit 20 includes a hardness inspection unit 23 in part (referred to as "means of inspecting Rockwell hardness" in claims). While the gripping unit 20 is gripping the workpiece 5, the hardness inspection unit 23 can inspect the hardness of the workpiece 5. In the first embodiment, the hardness inspection unit 23 includes a flat-type clamp seat portion 35 and executes a Rockwell hardness test. In a robot 2A according to a second embodiment of the present invention (illustration of the entire configuration is omitted because the configuration is the same as that of the robot 2), as illustrated in FIG. 9, a hardness inspection unit 23A (referred to as "means for inspecting Rockwell hardness" in claims) includes a U-shaped clamp seat portion 35A and executes a Rockwell hardness test.

### [Configuration of Robot 2]

The configuration of the robot 2 is described with reference to FIGS. 2 to 8. The robot 2 includes, as illustrated in FIG. 2, the gripping unit 20, the arm unit 21, and the main body portion 22. The arm unit 21 includes a first arm 21 a, a joint portion 21b, and a second arm 21c. The gripping unit 20 is mounted to one end of the first arm 21a on the opposite side to the joint portion 21b. The first arm 21a can cause the gripping unit 20 to move in the up-down direction by the joint portion 21b, and further change the angle of the gripping unit 20 with respect to the workpiece 5. Further, one end of the second arm 21 c on the main body portion 22 side is mounted to the main body portion 22, and the main body portion 22 can cause the second arm 21c to move in the front, rear, left, and right directions and also cause the second arm 21c to rotate about the main body portion 22. With this, the joint portion 21b provided on the other end of the second arm 21 c can also move in the front, rear, left, and right directions and rotate about the main body portion 22.

Further, the gripping unit 20 includes the hardness inspection unit 23 in part. Note that, FIG. 4 is a view illustrating a state in which the gripping unit 20 of FIG. 3 is viewed from the lateral side. The hardness inspection unit 23 of the gripping unit 20 includes an indenter drive unit 30, an indenter retaining portion 31, a probe mounting portion 32, a probe 33, an indenter 34, and the clamp seat portion 35. In order to execute the Rockwell hardness test, the indenter 34 may employ a diamond cone having a leading end radius of 0.2 millimeters (mm) and a leading end angle of 120° or a 1/16-inch steel ball.

Further, the indenter drive unit 30 has grooves 36 for moving the indenter retaining portion 31. Further, as the original configuration of the gripping unit 20, the gripping unit 20 includes hand portions 40 and a hand drive unit 41. Note that, the internal mechanism of the hand drive unit 41 is the same as that in a general industrial robot, and hence illustration and description thereof are omitted.

### [Operation of Robot 2]

The robot 2 can, as illustrated in FIG. 5, grip the workpiece 5 with the hand portions 40. In this case, when the hardness inspection of the workpiece 5 is executed, as illustrated in FIG. 6, the indenter retaining portion 31 is moved in the direction toward the workpiece 5. With this, the indenter 34 provided on the leading end of the probe 33 abuts against the workpiece 5, and a predetermined hardness inspection procedure to be described later is executed so that the hardness of the workpiece 5 can be inspected.

At this time, it is preferred that, after the hand portions 40 of the gripping unit 20 grip the workpiece 5, the gripping unit 20 horizontally retain the workpiece 5, and after the gripping state of the workpiece 5 becomes stable, the hardness of the workpiece 5 be inspected. Note that, the robot 2 has a feature in that the hardness inspection can be executed at any angle, and hence under a condition in which the workpiece 5 cannot be set horizontally, it is not necessary to retain the workpiece 5 horizontally.

The robot 2 executes the Rockwell hardness test. The hardness inspection procedure is described below.

(1) The robot 2 uses the indenter 34 to apply, as a basic load, 10 kg with respect to the surface of the workpiece 5.
(2) The robot 2 sets, as an initial value a, "100 (when the indenter 34 is diamond)" or "130 (when the indenter 34 is a steel ball)".
(3) The robot 2 uses the indenter 34 to apply, as a test load, 150 kg (when the indenter 34 is diamond) or 100 kg (when the indenter 34 is a steel ball) with respect to the surface of the workpiece 5.
(4) The robot 2 sets the test load (150 kg or 100 kg) back to the first basic load (10 kg).
(5) The robot 2 acquires the measurement value in this state as a value h (mm) of the depth of the recess generated when the workpiece 5 is plastic-deformed by the test load.
(6) The robot 2 calculates, based on the above-mentioned a (100 or 130), the value of h, and a predetermined constant b (=500), the Rockwell hardness HRC (when the indenter 34 is diamond) or the Rockwell hardness HRB (when the indenter 34 is a steel ball) as follows:
   HRC=100-500h
      or
   HRB=130-500h.

The robot 2 executes the above-mentioned procedure in accordance with the inspection instruction from the outside, and further outputs the calculated inspection result to the outside.

### [Effects]

According to the robot 2, in a process of gripping the workpiece 5 by the robot 2 to move the workpiece 5, the hardness of the workpiece 5 can be inspected. Accordingly, the hardness inspection can be automated.

Further, in conventional hardness inspection, only a test sample cut out from an object to be inspected can be subjected to inspection on a predetermined inspection stage that is horizontally placed. On the other hand, according to the robot 2, the indenter 34 can be directly pressed against the object to be inspected at various angles to inspect the hardness. With this, it is possible to eliminate the trouble of cutting out the test sample from the object to be inspected, and it becomes unnecessary to damage the object to be inspected to cut out the test sample. That is, the hardness inspection can be executed with respect to the workpiece 5 in a non-destructive manner. Thus, the hardness inspection can be executed with respect to all of the workpieces 5 transported on the conveyor belt 3 in a non-destructive manner.

### [Regarding In-line Hardness Inspection Device 1]

As described above, the robot 2 can inspect the hardness of the workpiece 5 while gripping the workpiece 5. As illustrated in FIG. 7, such a robot 2 is arranged adjacent to the conveyor belt 3 of the manufacturing line. In this manner, it is possible to configure the in-line hardness inspection device 1 that automatically executes hardness inspection with respect to all of the workpieces 5 transported on the conveyor belt 3. In addition, the in-line hardness inspection device 1 can execute, for example, a selecting step of the workpiece 5 in accordance with the hardness, which is to be described later. Note that, the selecting step is controlled by the control device 4 for the manufacturing line. Further, a process from START to END of FIG. 8 is a process for one cycle, and the process is repeated during the operation of the manufacturing line.

START: The control device 4 activates the robot 2 and the manufacturing line including the conveyor belt 3. Then, the process proceeds to Step S 1.

Step S1: The control device 4 instructs the robot 2 to grip any one of the plurality of workpieces 5. Then, the process proceeds to Step S2.

Step S2: The control device 4 instructs the robot 2 to execute the hardness inspection by the above-mentioned procedure of (1) to (5). Then, the process proceeds to Step S3.

Step S3: The control device 4 determines whether or not the hardness inspected by the robot 2 is correct. When it is determined that the hardness is correct, the process proceeds to Step S4. On the other hand, when it is determined that the hardness is incorrect, the process proceeds to Step S5.

Step S4: The control device 4 instructs the robot 2 to move the workpiece 5 to the next processing step to end the process for one cycle (END).

Step S5: The control device 4 instructs the robot 2 to place the workpiece 5 back to the original location and to grip another workpiece 5. Then, the process returns to Step S1.

### [Effects]

In this manner, the robot 2 arranged adjacent to the conveyor belt 3 of the manufacturing line can automatically execute, in a non-destructive manner, hardness inspection of the workpiece 5 along with the transportation of the workpiece 5.

### [Regarding Robot 2A]

The robot 2A is described with reference to FIGS. 9 and 10. Note that, the robot 2A differs from the robot 2 merely in the clamp seat portion 35A of the hardness inspection unit 23A. The entire configuration is the same as that of the robot 2 illustrated in FIG. 2, and hence illustration thereof is omitted. FIG. 10 is a view illustrating a state in which the hardness inspection unit 23A of FIG. 9 is viewed from the lateral side. A gripping unit 20A of the robot 2A includes, as illustrated in FIGS. 9 and 10, the hardness inspection unit 23A. The hardness inspection unit 23A differs from the hardness inspection unit 23 of the first embodiment in that the hardness inspection unit 23A includes the U-shaped clamp seat portion 35A.

### [Effects]

According to the robot 2A, it is possible to automatically and efficiently perform the hardness inspection with respect to a structure having an irregularity, such as a U-shaped workpiece 5A.

### [Other Embodiment]

The embodiments of the present invention can be variously modified without departing from the gist of the present invention. In the above-mentioned embodiments, description is made of an example in which the Rockwell hardness test is executed, but by appropriately changing the configuration of the hardness inspection unit or the type of the indenter, the present invention is also applicable to other hardness tests (for example, Vickers hardness test and Brinell hardness test). Alternatively, a configuration that can support a plurality of different hardness tests may be provided so that the test method may be switched as necessary.

Further, in the example of the manufacturing line of FIG. 7, description is made of the step of selecting the workpiece 5 by the robot 2. However, the present invention is not limited to the selecting step, and if the hardness test of the workpiece 5 is required in the middle of the manufacturing line, the robot 2 is applicable. For example, the present invention is applicable to a case where the plurality of workpieces 5 are sorted into any one of a plurality of different subsequent steps in accordance with the hardness. Further, when the robot 2 is applied for hardness inspection after the processing of the workpiece 5 is completed and before shipment, in a step of loading the workpieces 5 on a transport vehicle or the like, hardness inspection can be additionally executed. With this, the shipping step can be automated and performed effectively.

Further, in the above-mentioned embodiments, description is made of an example in which the workpiece 5 gripped by the gripping unit 20 or 20A is subjected to the hardness inspection by the hardness inspection unit 23 or 23A provided on the gripping unit 20 or 20A in part. In contrast, as another example, with respect to a hardness measuring part of the workpiece 5 transported on the conveyor belt 3, under a state in which the workpiece 5 is placed on the conveyor belt 3, without gripping the workpiece 5, the hardness inspection unit 23 or 23A may sandwich the hardness measuring part of the workpiece 5 to inspect the hardness. In this case, the robot may include only the hardness inspection unit 23 or 23A without including the gripping unit 20 or 20A.

### {Reference Signs List}

1: in-line hardness inspection device, 2, 2A: robot, 3: conveyor belt (workpiece transporting means), 4: control device (control means), 5, 5A: workpiece, 20, 20A: gripping unit, 21: arm unit, 23, 23A: hardness inspection unit (means for inspecting Rockwell hardness)

## Claims

1. An in-line hardness inspection device, comprising:
a robot including a hardness inspection unit which inspects hardness of a workpiece;
a workpiece transporting means constituting a part of a manufacturing line, the workpiece transporting means being configured to transport the workpiece that is an object to be inspected to the robot; and
a control means which executes hardness inspection by the robot with respect to the workpiece transported by the workpiece transporting means.

2. An in-line hardness inspection device according to claim 1,
wherein the robot further includes:
a gripping unit which grips the workpiece; and
an arm unit which moves or rotates the gripping unit under a state in which the workpiece is gripped, and
wherein the hardness inspection unit is provided on the gripping unit, and inspects the hardness of the workpiece that is gripped by the gripping unit.

3. An in-line hardness inspection device according to claim 1, wherein the hardness inspection unit comprises a means of inspecting Rockwell hardness.

4. An in-line hardness inspection device according to claim 2, wherein the hardness inspection unit comprises a means of inspecting Rockwell hardness.

5. An in-line hardness inspection method, comprising:
transporting, by workpiece transporting means constituting a part of a manufacturing line, a workpiece that is an object to be inspected; and
executing, by a robot including a hardness inspection unit which inspects hardness of the workpiece and being arranged adjacent to the workpiece transporting means, hardness inspection with respect to the workpiece transported by the workpiece transporting means.

6. An in-line hardness inspection method according to claim 5,
wherein the robot includes:
a gripping unit which grips the workpiece; and
an arm unit which moves or rotates the gripping unit under a state in which the workpiece is gripped, and
wherein the hardness inspection unit is provided on the gripping unit, and inspects the hardness of the workpiece that is gripped by the gripping unit.

7. A robot, which is arranged adjacent to workpiece transporting means that constitutes a part of a manufacturing line and transports a workpiece that is an object to be inspected, the robot being configured to execute hardness inspection with respect to the workpiece transported by the workpiece transporting means,
the robot comprising a hardness inspection unit which inspects hardness of the workpiece.

8. A robot according to claim 7, further comprising:
a gripping unit which grips the workpiece; and
an arm unit which moves or rotates the gripping unit under a state in which the workpiece is gripped, and
wherein the hardness inspection unit is provided on the gripping unit, and inspects the hardness of the workpiece that is gripped by the gripping unit.
